# FASCICULE DE BREVET EUROPEEN

(11) **EP 4 449 222 B1**
(45) Date de publication et mention de la délivrance du brevet: **08.04.2026**
(21) Numéro de dépôt: 22834654.0
(22) Date de dépôt: 14.12.2022
(51) Int. Cl.: G05D 1/00

(54) **PROCÉDÉ ET SYSTÈME DE RALLIEMENT AUTOMATIQUE D'UN ENGIN MARIN VERS UN DISPOSITIF DE RECUPERATION D'UN NAVIRE MERE**
AUTOMATISCHES HOMING-VERFAHREN UND SYSTEM ZUR FÜHRUNG EINES WASSERFAHRZEUGS ZU EINER BERGUNGSVORRICHTUNG EINES MUTTERSCHIFFS
AUTOMATIC HOMING METHOD AND SYSTEM FOR GUIDING A SEA CRAFT TOWARDS A RECOVERY DEVICE OF A MOTHER SHIP

(30) Priorité: 15.12.2021 FR 2113536
(43) Date de publication de la demande: 23.10.2024
(73) Titulaire: Societe d'Ingenierie de Recherches et d'Etudes en Hydrodynamique Navale par Abreviation Sirehna, 44321 Nantes cedex 03 (FR)
(72) Inventeur: PASQUIER, Romain, 44340 BOUGUENAIS (FR); CALVIGNAC, Julien, 44340 BOUGUENAIS (FR); LEFORT, Alexandre, 44340 BOUGUENAIS (FR)
(74) Mandataire: Lavoix
(86) Numéro de dépôt international: PCT/EP2022/085864
(87) Numéro de publication internationale: WO 2023/111024

(56) Documents cités:
- WO-A1-2017/054796
- WO-A1-2020/099665

## Description

La présente invention concerne la récupération d'un engin marin à bord d'un navire mère à l'aide d'un dispositif de récupération équipant le navire mère.

Il est possible d'embarquer, dans un navire mère (ou bateau mère), un engin marin pouvant être mis à l'eau à partir du navire mère et récupéré à bord du navire mère à l'aide d'un dispositif de récupération.

L'engin marin est par exemple prévu pour la réalisation de missions spécifiques, comme par exemple le relevé de données, l'exploration sous-marine ou la télécommunication.

Une manœuvre de récupération d'un engin marin à bord d'un navire mère peut s'avérer difficile selon les conditions de mer, en particulier lorsque le navire mère continue d'avancer pendant la manœuvre de récupération et que la mer est formée.

En effet, l'engin marin et la navire mère subissent la houle alors qu'ils manœuvrent à proximité l'un de l'autre. Il existe donc un risque élevé que l'engin marin percute le navire mère et que l'engin marin ou le navire mère soit endommagés. Il existe aussi un risque de blessure pour des opérateurs intervenant pour la récupération de l'engin marin.

Pour limiter les risques, une manœuvre de ralliement d'un engin marin autonome tel qu'un drone de surface (ou USV pour « Unmanned Surface Vehicle ») peut être réalisée en pilotage manuel, le drone de surface étant alors piloté à distance par un opérateur humain pour amener le drone de surface vers un dispositif de récupération du navire mère.

Cependant, le pilotage manuel à distance d'un drone de surface lors d'une manœuvre de ralliement d'un navire mère reste délicat, en particulier lorsque la mer est formée.

WO2020099665A1 divulgue un dispositif de récupération d'un drone à bord d'un navire, le dispositif de récupération comprenant un berceau pouvant être mis à l'eau à côté du navire, la récupération se faisant en pilotant le véhicule pour effectuer une approche sur le côté suivant une ligne oblique par rapport à une direction de déplacement du navire.

WO2017054796A1 divulgue un procédé de récupération d'un véhicule sous-marin dans un véhicule d'escorte comprenant un dispositif de récupération situé à la proue ou sur le côté du véhicule d'escorte, le procédé de récupération mettant en œuvre un échange de signaux sonores pour déterminer une distance latérale.

Un des buts de l'invention est de proposer un procédé de ralliement d'un engin marin vers un dispositif de récupération d'un navire mère, qui puissent être réalisé de manière fiable et sécurisée.

A cet effet, l'invention propose un procédé de ralliement selon la revendication 1.

L'invention concerne également un système de ralliement selon la revendication 10.

L'invention concerne encore un programme d'ordinateur selon la revendication 11.

L'invention et ses avantages seront mieux compris à la lecture de la description qui va suivre, donnée uniquement à titre d'exemple non limitatif, et faite en référence aux dessins annexés, sur lesquels :
- la Figure 1 est une vue schématique de dessus d'un navire mère et d'un engin marin, illustrant un découpage de l'espace d'évolution de l'engin marin autour du navire mère en une pluralité de zones prédéfinies ;
- la Figure 2 est une vue schématique d'un système de ralliement pour la mise en œuvre du procédé de ralliement de manière automatisée ; et
- la Figure 3 est vue schématique illustrant une machine à états (ou automate fini) prévu pour la mise en œuvre du procédé de ralliement.

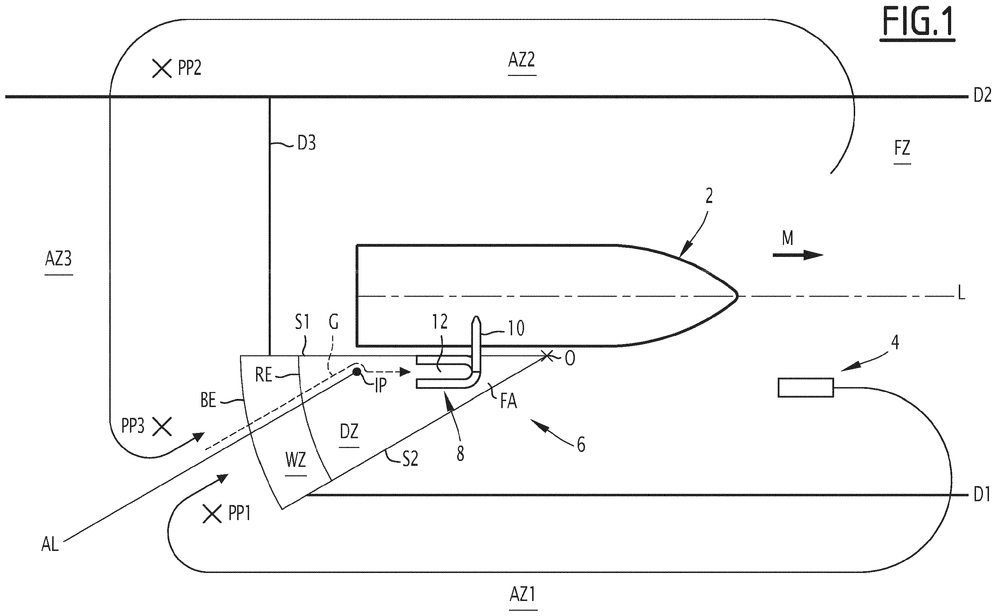

La Figure 1 illustre un navire mère 2 (ou bateau mère) et un engin marin 4 configuré pour être transporté à bord du navire mère 2, mis à l'eau à partir du navire mère 2 et récupéré à bord du navire mère 2. L'engin marin 4 est ici représenté en mer et à l'avant du navire mère 2.

L'engin marin 4 est par exemple un engin marin de surface, i.e. un engin prévu pour naviguer sur la surface de la mer.

En variante, l'engin marin 4 est un engin sous-marin, i.e. un engin prévu pour naviguer sous la surface de la mer. Dans ce cas, l'engin marin est aussi adapté pour naviguer à la surface de la mer, en particulier pour la réalisation d'une manoeuvre de ralliement.

L'engin marin 4 est par exemple un drone marin, en particulier un drone marin de surface, aussi désigné USV pour « Unmanned Surface Vehicle ».

Un drone marin est configuré pour naviguer de manière autonome, i.e. en contrôlant ses déplacements.

L'engin marin 4 est mis à l'eau par exemple pour la réalisation de missions spécifiques. Il peut s'agir par exemple de missions d'exploration, de missions de collecte de données ou de missions de télécommunication.

Le navire mère 2 est équipé d'un système de récupération 6 configuré pour réaliser la récupération de l'engin marin 4 à bord du navire mère 2.

Le système de récupération 6 est par exemple configuré pour récupérer l'engin marin à un point de récupération situé le long d'un des deux bords 2A, 2B du navire mère 2, de préférence pendant que la navire mère 2 avance, comme illustré par la flèche M sur la Figure 1.

Le système de récupération 6 comprend par exemple un dispositif de récupération 8 configuré pour être mis en prise ou amarré avec l'engin marin 4 pour récupérer l'engin marin 4.

Le dispositif de récupération 8 est par exemple manipulable par un outil de levage 10 et configuré pour être amarré avec l'engin marin 4 de telle manière à pouvoir utiliser le dispositif de récupération 8 pour soulever l'engin marin 4 hors de l'eau et le ramener à bord du navire mère 2.

Le dispositif de récupération 8 est par exemple configuré pour être mis à l'eau et permettre à l'engin marin 4 de venir s'amarrer au dispositif de récupération 8, l'outil de levage 10 permettant de transférer le dispositif de récupération 8 et l'engin marin 4 amarré à ce-dernier à bord du navire mère 2.

Le dispositif de récupération 8 est par exemple flottant et configuré pour être posé sur l'eau pour la récupération de l'engin marin 4 et manipulable à l'aide de l'outil de levage 10 pour le transférer entre la mer et le navire mère 2.

Le dispositif de récupération 8 délimite par exemple un espace de réception 12 dans lequel l'engin marin 4 peut entrer lorsque le dispositif de récupération 8 est mis à l'eau, le dispositif de récupération 8 pouvant être soulevé pour récupérer l'engin marin 4 une fois que celui-ci est entrée dans l'espace de réception 12.

Le dispositif de récupération 8 est par exemple configuré pour que l'engin marin 4 entre dans l'espace de réception 12 par l'arrière du dispositif de récupération 8, en particulier pendant que le navire mère 2 avance.

Pour ce faire, l'espace de réception 12 est par exemple ouvert vers l'arrière pour délimiter une ouverture d'entrée permettant à l'engin marin 4 d'entrer dans l'espace de réception par l'arrière.

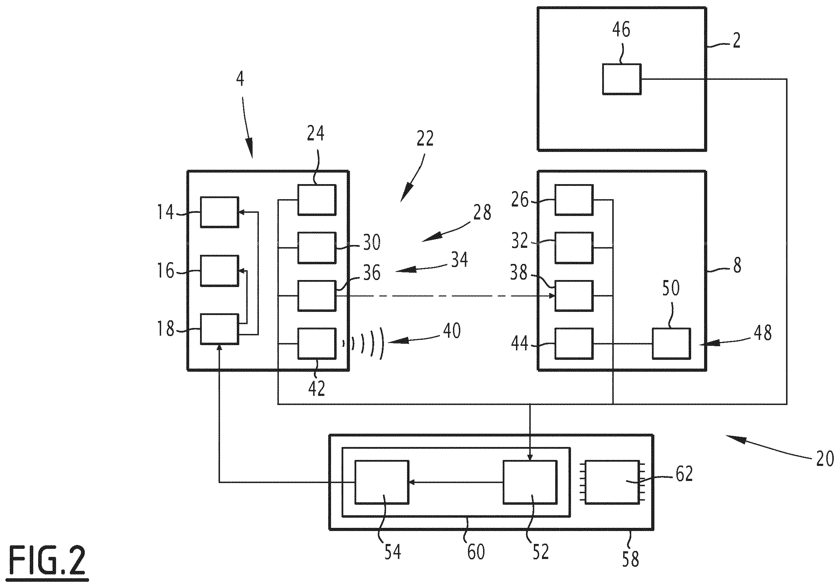

La Figure 2 est un schéma bloc illustrant le navire mère 2, l'engin marin 4 et le dispositif de récupération 8.

L'engin marin 4 est configuré pour pouvoir naviguer de manière autonome, i.e. sans intervention d'un pilote humain, en contrôlant lui-même sa propulsion et sa trajectoire. Ainsi, l'engin marin 4 est propre à avancer et à se diriger par lui-même.

L'engin marin 4 comprend un système de propulsion 14 configuré pour assurer la propulsion de l'engin marin 4, un système de direction 16 configuré pour assurer la direction de l'engin marin 4 et un système électronique de pilotage automatique 18 configuré pour commander le système de propulsion 14 et le système de direction 16 pour assurer la navigation autonome de l'engin marin 4.

Le système de propulsion 14 comprend par exemple au moins une hélice couplée à au moins un moteur.

Le système de direction 16 comprend au moins une gouverne orientable, par exemple un safran, et/ou un dispositif d'orientation configuré pour orienter le système de propulsion 14 de manière à diriger l'engin marin 4.

Le système électronique de pilotage automatique 18 est configuré pour commander le système de propulsion 14 et le système de direction 16 pour le contrôle des déplacements du l'engin marin 4.

Le système électronique de pilotage automatique 18 comprend par exemple une application logicielle enregistrée dans une mémoire et exécutable par un processeur, un composant logique programmable ou un circuit intégré spécifique.

Un système de ralliement automatique 20 est configuré pour assurer le ralliement de l'engin marin 4 vers le navire mère 2 de manière automatisée, en particulier pour assurer le ralliement de l'engin marin 4 vers le dispositif de récupération 8 de manière automatisée.

Le ralliement réalisé de manière automatisée signifie ici que l'engin marin 4 rallie le dispositif de récupération 8, en étant dans un mode de pilotage automatique dans lequel les déplacements de l'engin marin 4 sont commandés par le système électronique de pilotage automatique 18, sans intervention d'un pilote humain pour commander la vitesse et la trajectoire de l'engin marin 4.

Le système de ralliement automatique 20 est configuré pour la mise en œuvre d'un procédé de ralliement dans lequel l'engin marin 4 suit une procédure de ralliement prédéterminée basée sur le découpage d'un espace d'évolution de l'engin marin 4 autour du navire mère 2 en une pluralité de zones prédéfinies.

Le procédé de ralliement comprend :
- la détermination d'une position de l'engin marin 4 par rapport au dispositif de récupération 8, la position de l'engin marin 4 étant déterminée à partir de données de positionnement fournies par un système de mesure de position relatif 22 ; et
- le calcul de consignes de navigation et leur transmission au système électronique de pilotage automatique 18 de l'engin marin 4, les instructions de pilotage étant calculées en fonction de la position de l'engin marin 4 et de manière à suivre la procédure de ralliement prédéterminée basée sur le découpage d'un espace d'évolution de l'engin marin 4 autour du navire mère 2 en une pluralité de zones.

Le système de ralliement automatique 20 comprend par exemple un système de mesure de position 22 configuré pour mesurer la position relative de l'engin marin 4 et dispositif de récupération 8 au cours de la manoeuvre de récupération.

En option, le système de mesure de position 22 comprend une centrale inertielle d'engin marin 24 embarquée dans l'engin marin 4 pour la mesure des mouvements de l'engin marin 4 et/ou une centrale inertielle de dispositif de récupération 26 embarquée dans le dispositif de récupération 8 pour la mesure des mouvements du dispositif de récupération 8.

La connaissance de données inertielles de l'engin marin 4 et/ou du dispositif de récupération 8 permet par exemple d'affiner la mesure de position et/ou d'affiner le pilotage automatique de l'engin marin 4 pour le ralliement du dispositif de récupération 8.

Le système de mesure de position 22 comprend par exemple un dispositif de géolocalisation 28 comprenant un premier récepteur de géolocalisation 30 embarqué sur l'engin marin 4 et/ou un deuxième récepteur de géolocalisation 32 embarqué sur le dispositif de récupération 8.

La connaissance de la position géographique de chacun de l'engin marin 4 et du dispositif de récupération 8 permet de connaître leur position relative.

En alternative ou en complément facultatif, le système de mesure de position 22 comprend un dispositif de mesure de position à balises 34 comprenant une ou plusieurs balises 36 disposées sur l'engin marin 4 et/ou le dispositif de récupération 8, et un ou plusieurs détecteurs de balise 38 disposés sur l'engin marin 4 et/ou le dispositif de récupération 8.

Le dispositif de mesure de position à balises 34 comprend par exemple une ou plusieurs balises 36 disposées sur l'engin marin 4 et associées à un ou plusieurs détecteurs de balise 38 disposés sur le dispositif de récupération 8 et/ou une ou plusieurs balises 36 disposées sur le dispositif de récupération 8 et associées à un ou plusieurs détecteurs de balise 38 disposés sur l'engin marin 4.

Les balises 36 du dispositif de mesure de position à balises 34 sont par exemple des balises optiques, en particulier des balises matricielles, et les détecteurs de balise 38 sont des capteurs d'images, en particulier des caméras, la mesure de la position à l'aide du dispositif de mesure de position à balises 34 étant réalisée par analyse des images fournies par les détecteurs de balise 38 pour détecter la taille, la position et/ou l'orientation de la représentation de chaque balise 38 présente dans les images capturées par les détecteurs de balise 38.

Des balises 36 optiques du dispositif de mesure de position par balises 34 sont par exemple des balises de type « AprilTags ».

En alternative ou en complément facultatif, le système de mesure de position 22 comprend un dispositif de mesure de position à ultrasons 40 comprenant un ou plusieurs émetteurs d'ultrasons 42 disposés l'engin marin 4 et/ou le dispositif de récupération 8 et un ou plusieurs récepteurs d'ultrasons 44 disposés l'engin marin 4 et/ou le dispositif de récupération 8.

Le dispositif de mesure de position à ultrasons 40 comprend par exemple un ou plusieurs émetteurs d'ultrasons 42 disposées sur l'engin marin 4 associés à un ou plusieurs récepteur d'ultrasons 44 disposés sur le dispositif de récupération 8 et/ou un ou plusieurs émetteurs d'ultrasons 42 disposés sur le dispositif de récupération 8 associés à un ou plusieurs récepteurs d'ultrasons 44 disposés sur l'engin marin 4.

La mesure de la position de l'engin marin 4 par rapport au dispositif de récupération 8 par ultrasons est réalisée par exemple par analyse du temps mis par les ultrasons émis par chaque émetteur d'ultrasons 42 pour atteindre un ou plusieurs parmi les récepteurs d'ultrasons 44.

Le système de mesure de position 22 comprend par exemple un dispositif de détection longue distance 46 prévu pour déterminer la position de l'engin marin 4 par rapport au dispositif de récupération 8 lorsque l'engin marin 4 est encore éloigné du navire mère 2.

Le dispositif de détection longue distance 46 est par exemple un dispositif de détection par ondes radar équipant le navire mère 2, le dispositif de détection par ondes radar étant adapté pour détecter l'engin marin 4 lorsque celui-ci est à l'eau.

Le dispositif de détection longue distance 46 peut présenter un temps de réponse long et une précision faible dans la mesure où il est utilisé lorsque l'engin marin 4 est encore éloigné du navire mère 2 et le risque de collision entre l'engin marin 4 et le navire mère 2 est faible.

Le système de ralliement 20 comprend un dispositif de détection d'amarrage 48 configuré pour détecter l'amarrage de l'engin marin 4 sur le dispositif de récupération 8.

Le dispositif de détection d'amarrage 48 comprend par exemple au moins un capteur de présence 50 agencé pour détecter la présence de l'engin marin 4 dans l'espace de réception 12 du dispositif de récupération 8. Chaque capteur de présence 50 est par exemple un capteur optique.

Le système de ralliement automatique 20 comprend un module de position 52 configuré pour déterminer la position de l'engin marin 4 par rapport au dispositif de récupération 8 en fonction de données de position fournies par le système de mesure de position 22.

Le module de position 52 est par exemple configuré pour déterminer en outre un état de l'ensemble formé par l'engin marin 4 et le dispositif de récupération 8, en fonction de données de position fournies par le système de mesure de position 22, incluant éventuellement des données inertielles de l'engin marin 4 et du dispositif de récupération 8, et des données d'état de l'engin marin 4 fournies par le système de propulsion 14 et le système de direction 16.

Des données d'état de l'engin marin 4 comprennent par exemple une vitesse de rotation d'une hélice de propulsion, un angle d'orientation d'une hélice de propulsion si elle est orientable pour diriger l'engin marin 4 et/ou un angle d'orientation d'une gouverne.

Le système de ralliement 20 comprend un module de guidage 54 configuré pour guider l'engin marin 4 lors du procédé de ralliement, de telle manière que l'engin marin 4 rejoigne le dispositif de récupération 8 et s'amarre à ce dernier.

Le module de guidage 54 est configuré pour calculer des consignes de navigation à partir de données de position fournies par le système de mesure de position 22 et en appliquant la procédure de ralliement prédéfinie, et pour transmettre les consignes de navigation au système électronique de pilotage automatique 18 de l'engin marin 4 afin de que ce dernier mette en oeuvre ces consignes de navigation par l'intermédiaire du système de propulsion 14 et du système de direction 16 pour rallier le dispositif de récupération 8 selon la procédure de ralliement prédéfinie.

Les consignes de navigation calculées par le module de guidage 54 et transmises au système électronique de pilotage automatique 18 prennent par exemple la forme d'une trajectoire de consigne, par exemple une trajectoire de consigne définie par deux points, l'un étant l'engin marin 4 et l'autre étant un point de destination.

Selon la procédure de ralliement, l'espace d'évolution de l'engin marin 4 autour du navire mère 2 est découpé en une pluralité de zones définies par rapport au navire mère 2, l'engin marin 4 étant guidé au cours de la procédure de ralliement en fonction de la zone dans laquelle il se situe parmi la pluralité de zones prédéfinies.

Le module de position 52 est par exemple configuré pour déterminer automatiquement dans quelle zone l'engin marin 4 se situe parmi la pluralité de zones de l'espace d'évolution de l'engin marin 4 autour du navire mère 2.

Comme visible sur la Figure 1, la pluralité de zones comprend une zone interdite FZ, au moins une zone d'approche AZ1, AZ2, AZ3, une zone d'attente WZ et/ou une zone d'amarrage DZ.

La pluralité de zones comprend par exemple plusieurs zones d'approche incluant une première zone d'approche AZ1, une deuxième zone d'approche AZ2 et une troisième zone d'approche AZ3.

La procédure de ralliement comprend le guidage de l'engin marin 4 se situant dans la zone interdite FZ vers une zone d'approche AZ1, AZ2, AZ3, le guidage de l'engin marin 4 se situant dans une zone d'approche AZ1, AZ2, AZ3 vers la zone d'amarrage DZ, et le guidage de l'engin marin 4 situé dans la zone d'amarrage DZ pour la réalisation de l'amarrage de l'engin marin 4 au dispositif de récupération 8, de préférence en suivant une ligne d'approche AL prédéfinie

La zone interdite FZ est par exemple une bande imaginaire s'étendant devant le navire mère 2 et sur les côtés du navire mère 2.

La zone interdite FZ est la bande imaginaire délimitée entre une première droite D1 et une deuxième droite D2 parallèles à l'axe longitudinal L du navire mère 2 et située latéralement de part et d'autre du navire mère 2, et une troisième droite D3 s'étendant perpendiculairement à l'axe longitudinal L entre la première droite D1 et la deuxième droite D2 en passant derrière le navire mère 2.

La largeur de la zone interdite FZ (i.e. la distance entre la première droite D1 et la deuxième droite D2, prise perpendiculairement à l'axe longitudinal L du navire mère 2) est choisie afin que l'engin marin 4 situé dans la zone interdite FZ dispose de suffisamment d'espace pour tourner et s'orienter pour sortir rapidement de la zone interdite FZ.

La largeur de la zone interdite FZ est strictement supérieure à la largeur du navire mère 2. La largeur de la zone interdite FZ est par exemple comprise entre 42 m et 100 m, en particulier entre 48 m et 80 m, par exemple d'environ 70 m.

Le navire mère 2 se situe dans la zone interdite FZ.

Le dispositif de récupération 8 positionné pour la récupération de l'engin marin 4 est disposé sur le côté du navire mère 2, également dans la zone interdite FZ.

La zone d'amarrage DZ est une région de la zone interdite par laquelle l'engin marin 4 est autorisé à pénétrer dans la zone interdite pour s'approcher du navire mère 2 et rallier le dispositif de récupération 8.

La zone d'amarrage DZ est située sur le côté du navire mère 2, du même côté du navire mère 2 que le dispositif de récupération 8, plus particulièrement dans le coin de la zone interdite FZ délimité par la première droite D1 et la troisième droite D3.

La zone d'amarrage DZ présente par exemple une forme convergente depuis un bord arrière RE, par lequel, selon la procédure de ralliement, l'engin marin 4 pénètre dans la zone d'amarrage DZ pour venir s'amarrer au dispositif de récupération 8, vers une région avant FA de la zone d'amarrage DZ dans laquelle se situe le dispositif de récupération 8.

La largeur de la zone d'amarrage DZ, prise perpendiculairement à l'axe longitudinal L du navire mère 2, diminue progressivement depuis le bord arrière RE de la zone d'amarrage DZ vers la région avant FA de la zone d'amarrage DZ.

La zone d'amarrage DZ est par exemple délimitée entre un premier segment de droite S1 et un deuxième segment de droite S2 qui converge de l'arrière vers l'avant vers un centre O.

Le premier segment de droite S1 est par exemple parallèle à l'axe longitudinal L du navire mère 2 et le deuxième segment de droite S2 oblique par rapport à l'axe longitudinal L du navire mère 2, le deuxième segment de droite S2 s'étendant de la région avant FA de la zone d'amarrage DZ vers le bord arrière RE de la zone d'amarrage DZ en s'éloignant du navire mère 2.

La zone d'amarrage DZ présente par exemple une forme générale triangulaire, trapézoïdale ou en portion de disque.

La zone d'amarrage DZ a par exemple la forme d'une portion de disque délimitée, le bord arrière RE ayant la forme d'un arc de cercle centré sur un centre O situé devant le dispositif de réception 8 mis à l'eau.

L'étendue angulaire de la zone d'amarrage DZ autour du centre O de convergence du premier segment de droite S1 et du deuxième segment de droite S2 est comprise par exemple entre 20° et 60°, en particulier entre 30° et 50°.

Le bord arrière RE est par exemple situé à une distance du centre O comprise entre 30 et 70 m, en particulier entre 30 et 60 m.

Optionnellement, la pluralité de zones comprend une zone d'attente WZ par laquelle l'engin marin 4 doit passer avant d'entrer dans la zone d'amarrage DZ, la procédure de ralliement comprenant de préférence le maintien de l'engin marin 4 dans la zone d'attente WZ avant le passage de l'engin marin 4 dans la zone d'amarrage DZ pour réaliser l'amarrage de l'engin marin 4 au dispositif de récupération 8.

L'engin marin 4 patiente par exemple dans la zone d'attente WZ le temps de réaliser des vérifications, en particulier le temps de vérifier que le système de mesure de position 22 est opérationnel pour assurer le guidage courte distance de l'engin marin 4.

La zone d'attente WZ est située derrière la zone d'amarrage DZ en considérant le sens de déplacement du navire mère 2, en particulier le long du bord arrière RE de la zone d'amarrage DZ.

La zone d'attente WZ présente par exemple la forme d'une bande s'étendant le long du bord arrière RE de la zone d'amarrage DZ.

La zone d'attente WZ est par exemple délimitée entre le bord arrière RE de la zone d'amarrage DZ et un bord arrière BE de la zone d'attente WE, situé derrière le bord arrière de la zone d'amarrage.

La distance entre le bord arrière RE de la zone d'amarrage DZ et le bord arrière BE de la zone d'attente WE est par exemple comprise entre 10 m et 70 m.

Lorsque la zone d'amarrage DZ a la forme d'une portion de disque s'étendant autour d'un centre O, la zone d'attente WZ est par exemple délimitée entre un premier arc de cercle définissant le bord arrière BE de la zone d'amarrage DZ et un deuxième arc de cercle définissant le bord arrière BE de la zone d'attente WE, les bords arrières BE étant centrés sur le centre O, le rayon du deuxième arc de cercle étant strictement supérieur à celui du premier arc de cercle. Le rayon du deuxième arc de cercle est par exemple compris entre 48 et 100 m.

Du côté du navire mère 2 où se situe le dispositif de récupération 8, la zone interdite FZ s'étend vers l'arrière jusqu'à la zone d'amarrage DZ et le cas échéant la zone d'attente WZ.

La ligne d'approche AL est prévue pour servir de référence au guidage de l'engin marin 4 pour son entrée dans la zone d'amarrage DZ, le cas échéant en passant par la zone d'attente WZ.

La ligne d'approche AL s'étend obliquement par rapport à l'axe longitudinal L du navire mère, en étant située du même côté du navire mère 2 que celui où est situé le dispositif de récupération 8.

La ligne d'approche AL s'étend jusqu'à un point d'inflexion IP situé en arrière du dispositif de récupération 8.

Chaque zone d'approche de la pluralité de zones est une zone à partir de laquelle l'engin marin 4 peut être guidé vers la zone d'amarrage DZ en suivant la procédure de ralliement, le cas échéant en passant préalablement par la zone d'attente WZ.

Comme indiqué plus haut, la pluralité de zones comprend par exemple une première zone d'approche AZ1, une deuxième zone d'approche AZ2 et une troisième zone d'approche AZ3.

La première zone d'approche AZ1 se situe latéralement sur le côté de la zone interdite FZ, du même côté du navire mère 2 que le dispositif de récupération 8, la deuxième zone d'approche AZ2 est situé sur latéralement sur le côté de la zone interdite du côté du navire mère 2 opposé au dispositif de récupération 8, et la troisième zone d'approche AZ3 est située derrière le navire mère 2.

La première zone d'approche AZ1 se situe latéralement au-delà de la première droite D1 qui définit la frontière entre la première zone d'approche AZ1 et la zone interdite FZ.

La première zone d'approche AZ1 est délimité vers l'arrière par la ligne d'approche AL qui définit la frontière entre la première zone d'approche AZ1 et la troisième zone d'approche AZ3.

La deuxième zone d'approche AZ2 se situe latéralement sur le côté de la zone interdite FZ, du côté du navire mère 2 opposé à celui où se situe le dispositif de récupération 2.

La deuxième zone d'approche AZ2 se situe latéralement au-delà de la deuxième demi-droite D2 qui définit la frontière entre la deuxième zone d'approche AZ2 et la zone interdite FZ.

La troisième zone d'approche AZ3 se situe derrière le navire mère 2 en étant délimitée entre la deuxième zone AZ2 d'approche et la ligne d'approche AL.

La troisième zone d'approche AZ3 est délimitée par exemple entre la deuxième droite D2, la troisième droite D3 et la ligne d'approche AL.

La procédure de ralliement comprend de préférence le guidage de l'engin marin 4 en fonction de points de passage imaginaires. Ces points de passages sont utilisés comme des bouées virtuelles par lesquelles l'engin marin 4 doit passer pour passer d'une zone à l'autre.

Les points de passages comprennent par exemple un premier point de passage PP1 par lequel l'engin marin 4 doit passer pour passer de la première zone d'approche AZ1 dans la zone d'amarrage DZ ou, le cas échéant, la zone d'attente WZ, un deuxième point de passage PP2 par lequel l'engin marin 4 doit passer pour de la deuxième zone d'approche AZ2 à la troisième zone d'approche AZ3, et un troisième point de passage PP3 par lequel l'engin marin 4 doit passer pour passer de la troisième zone d'approche AZ3 à la zone d'attente WZ.

Le premier point de passage PP1 est situé dans la première zone d'approche AZ1 en arrière du bord arrière RE de la zone d'amarrage, ou, le cas échéant, du bord arrière BE de la zone d'attente WZ.

Le deuxième point de passage PP2 est situé dans la deuxième zone d'approche AZ2 à proximité de sa frontière avec le troisième zone d'approche AZ3, en arrière de l'extrémité arrière de la zone interdite FB.

Le troisième point de passage PP3 est situé dans la troisième zone d'approche AZ3 en arrière du bord arrière RE de la zone d'amarrage DZ, ou, le cas échéant, le bord arrière BE de la zone d'attente WZ.

Le premier point de passage PP1, le deuxième point de passage PP2 et le troisième point de passage PP3 sont situés le long de l'axe longitudinal L du navire mère 2 en arrière de la proue du navire mère 2.

La procédure de ralliement comprend par exemple le guidage de l'engin marin 4 situé dans la zone interdite FZ vers celle de la première zone d'approche AZ1 et de la deuxième zone d'approche AZ2 qui est la plus proche, de préférence en donnant pour instruction à l'engin marin de se déplacer à sa vitesse de croisière et/ou de s'orienter perpendiculairement à l'axe longitudinal L. Cette orientation permet de sortir le plus vite possible de la zone interdite.

Lorsque l'engin marin 4 est dans la première zone d'approche AZ1, la procédure de ralliement comprend par exemple le guidage de l'engin marin 4 à sa vitesse de croisière et/ou vers le premier point de passage PP1, puis le guidage de l'engin marin 4 pour entrer dans la zone d'amarrage DZ, éventuellement en passant par la zone d'attente WZ, en suivant la ligne d'approche AL. Ce guidage est illustré sur la Figure 1 par la première trajectoire T1.

Lorsque l'engin marin 4 est dans la deuxième zone d'approche AZ2, la procédure de ralliement comprend par exemple le guidage de l'engin marin 4 à sa vitesse de croisière et/ou vers le deuxième point de passage PP2, puis le guidage de l'engin marin 4 à sa vitesse de croisière et/ou vers le troisième point de passage PP3, puis le guidage de l'engin marin 4 pour entrer dans la zone d'amarrage DZ, éventuellement en passant par la zone d'attente WZ, en suivant la ligne d'approche AL.

Lorsqu'une zone d'attente WZ est prévue, la procédure de ralliement comprend le guidage de l'engin marin 4 pour son maintien dans la zone d'attente WZ, par exemple en lui donnant pour instruction de s'orienter suivant l'axe longitudinal L du navire mère 2 et de se déplacer à la même vitesse que le navire mère 2.

La procédure de ralliement comprend par exemple le maintien de l'engin marin 4 dans la zone d'attente WZ le temps de procéder à des bonnes vérifications du système de mesure de position relatif 22 pour la mise en œuvre de l'amarrage.

Lorsque l'engin marin 4 est dans la zone d'amarrage DZ, la procédure de ralliement comprend par exemple le guidage de l'engin marin 4 le long de la ligne d'approche AL jusqu'au point d'inflexion IP, situé de préférence derrière le dispositif de récupération 8, puis le guidage de l'engin marin 4 du point d'inflexion jusqu'au dispositif de récupération 8 (comme illustré par la ligne en pointillés G).

La procédure de ralliement comprend l'abandon de la procédure de ralliement si au moins une condition d'abandon prédéfinie est remplie. La procédure de ralliement comprend l'abandon de la procédure de ralliement par exemple si l'engin marin passe de la zone d'amarrage à la zone interdite et/ou si l'engin marin passe de la zone d'attente à la zone interdite.

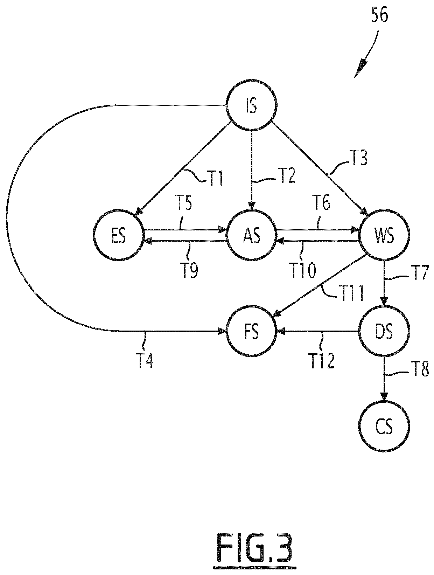

Comme illustré sur la Figure 3, le module de guidage 54**,** qui assure le suivi de la procédure de ralliement, comprend par exemple une machine à états 56 (ou automate fini) comprenant une pluralité d'état reliés par des transitions, chaque transition reliant deux états et définissant une condition de passage d'un des deux états qu'elle relie à l'autre.

Chaque état correspond par exemple à une position de l'engin marin 4 par rapport au dispositif de récupération 8, en particulier en fonction de la zone parmi la pluralité de zones dans laquelle l'engin marin 4 se situe parmi la pluralité de zones.

Chaque transition correspond par exemple à un changement de zone de l'engin marin parmi la pluralité de zones, éventuellement assorti d'une ou plusieurs conditions supplémentaires.

Les données de position fournies par le système de mesure de position 22 sont utilisées pour déclencher les transitions entre les différents états de la machine à états 56.

Dans chaque état de la machine à états 56, le module de guidage **54** calcule des consignes de navigation spécifique à cet état et les transmet au système électronique de pilotage automatique 18 de l'engin marin 4 qui commande la propulsion et la direction de l'engin marin 4 en fonction de ces consignes de navigation.

Pour chaque état de la machine à états 56, le module de guidage 54 transmet par exemple au système électronique de pilotage automatique 18 une vitesse de consigne et une trajectoire de consigne, le système électronique de pilotage automatique 18 commandant le système de propulsion 14 et le système de direction 16 de manière à suivre la vitesse de consigne e la trajectoire de consigne.

Comme illustré sur la Figure 3, la machine à état 56 comprend un état initial IS qui est l'état dans lequel se situe la machine à états au moment où la manœuvre de ralliement automatique est déclenchée.

La machine a états 56 comprend par exemple un état d'abandon FS de la manœuvre de ralliement qui déclenche un abandon de la manœuvre de ralliement.

La machine à états 56 comprend par exemple :
- un état initial IS ;
- un état d'échappement ES si l'engin marin 4 se situe dans la zone interdite FZ ;
- un état d'approche AS si l'engin marin 4 se situe dans une zone d'approche AZ, en particulier dans une parmi la première zone d'approche AZ1, la deuxième zone d'approche AZ2 et la troisième zone d'approche AZ3 ;
- un état d'attente WS si l'engin marin 4 se situe dans la zone d'attente WZ ;
- un état d'amarrage DS si l'engin marin 4 se situe dans la zone d'amarrage DZ ;
- un état amarré CS si l'engin marin 4 est arrimé au dispositif de récupération 8.

Lorsque la manœuvre de ralliement est déclenchée, la machine à états 56 se situe dans l'état initial IS et passe dans un parmi l'état d'échappement ES, l'état d'attente WS, l'état d'approche AS, l'état d'abandon FS et l'état d'amarrage DS en fonction de la position de l'engin marin 4 au déclenchement de la manœuvre de ralliement :
- si l'engin marin 4 est situé dans la zone interdite FZ, la machine à états 56 passe dans l'état d'échappement ES (transition T1);
- si l'engin marin 4 est situé dans une zone d'approche AZ1, AZ2, AZ3, la machine à états 56 passe dans l'état d'approche AS (transition T2);
- si l'engin marin 4 est situé dans la zone d'attente WZ, la machine à état 68 passe dans l'état d'attente WS (transition T3);
- si l'engin marin 4 n'est situé dans aucune parmi la zone interdite, les zones d'approche AZ1, AZ2, AZ3, la zone d'attente WZ, la machine à état 68 passe dans l'état d'abandon FS (transition T4).

Lorsque la machine à états 56 se situe dans l'état d'échappement ES (i.e. l'engin marin 4 est dans la zone interdite FZ), le module de guidage 54 transmet au système de pilotage automatique 16 des consignes de navigation pour faire sortir l'engin marin 4 de la zone interdite FZ, de préférence le plus rapidement possible.

Tant que l'engin marin 4 reste dans la zone interdite FZ, la machine à état 68 reste dans l'état d'échappement ES.

Si l'engin marin 4 passe de la zone interdite FZ une zone d'approche, en particulier à l'une de la première zone d'approche AZ1 et de la deuxième zone d'approche AZ2, la machine à états 56 passe dans l'état d'approche AS (transition T5).

Lorsque la machine à états 56 se situe dans l'état d'approche AS, le module de guidage 54 calcule des consignes de navigation pour guider l'engin marin 4 vers les points de passages d'approche, en particulier le premier point d'approche PP1, le deuxième point d'approche PP2 ou le troisième point d'approche PP3 pour rejoindre la zone d'amarrage DZ, éventuellement en passant par la zone d'attente WZ, en suivant la ligne d'approche AL.

De préférence, les consignes de navigation indiquent une vitesse de croisière et une trajectoire de consigne permettant de relier le prochain point de passage.

Si l'engin marin 4 se situe dans la première zone d'approche AZ1, les consignes de navigation guident l'engin marin 4 vers le premier point de passage PP1, à partir duquel l'engin marin 4 peut entrer dans la zone d'amarrage DZ, éventuellement en passant par la zone d'attente WZ.

Si l'engin marin 4 se situe dans la deuxième zone d'approche AZ2, les consignes de navigation guident l'engin marin 4 vers le deuxième point de passage PP2, à partir duquel l'engin marin 4 peut entrer dans la troisième zone d'approche AZ3.

Si l'engin marin 4 se situe dans la troisième zone d'approche AZ3, les consignes de navigation guident l'engin marin 4 vers le troisième point de passage PP3 à partir duquel l'engin marin peut entrer dans la zone d'amarrage DZ, éventuellement en passant par la zone d'attente WZ.

Lorsqu'une zone d'attente WZ est prévue, la machine à états 56 passe par exemple de l'état d'approche AS à l'état d'attente WS si l'engin marin 4 est dans la zone d'attente et si l'engin marin 4 a rallié au moins un des points de passages PP1, PP2, PP3 (transition T6).

Cette condition supplémentaire permet de s'assurer que l'engin marin 4 atteint la zone d'attente WZ en venant du premier point de passage PP1 ou du troisième point de passage PP3 et atteint ainsi la zone d'attente WZ avec une orientation satisfaisante pour permettre la suite de la manoeuvre de ralliement.

Lorsque la machine à états 56 se situe dans l'état d'attente WS, le module de guidage 54 calcule des consignes de navigation pour assurer un déplacement de l'engin marin 4 parallèlement à l'axe longitudinal L du navire mère 2, et transmet les consignes de navigation au système électronique de pilotage automatique 18 de l'engin marin 4.

La machine à états 56 passe par exemple dans l'état d'amarrage DS si la machine à état était précédemment dans l'état d'attente WS, et si elle reçoit une autorisation d'amarrage (transition T7).

L'autorisation d'amarrage est par exemple donnée par un opérateur humain supervisant la procédure de ralliement.

Ceci permet l'intervention d'un opérateur humain, par exemple pour valider que la procédure de ralliement peut être finalisée en prenant en compte des considérations externes, non directement liée à la procédure de ralliement.

En variante, l'autorisation d'amarrage est donnée par le système de ralliement automatique 20.

Lorsque la machine à états 56 se situe dans l'état d'amarrage DS, le module de guidage 54 calcule des consignes de navigation pour guider l'engin marin 4 le long de la ligne d'approche AL jusqu'au point d'inflexion IP situé dans la zone d'amarrage DZ, puis du point d'inflexion IP vers le dispositif de récupération 8.

Dans un exemple de réalisation, les consignes de navigation du point d'inflexion IP vers le dispositif de récupération 8 sont calculées en fonction d'une position absolue du dispositif de récupération 8 fournie par le système de mesure de position 22, de préférence filtrée par un filtre du premier ordre avec une constante de temps comprise entre 3 s et 10 s, par exemple une constante de temps de 5 s.

La machine à états 56 passe dans l'état amarré CS si le module de guidage 54 reçoit un signal indiquant que l'engin marin 4 est amarré au dispositif de récupération 8 (transition T8).

La manoeuvre de ralliement est alors terminée et le module de guidage 54 transmet des consignes de guidage nulles, i.e. qu'il ne donne plus de consigne de guidage, le système de pilotage automatique 16 de l'engin marin 4 étant alors configuré pour maintenir le système de propulsion 12 et le système de direction 14 inactifs.

La machine à états 56 passe par exemple de l'état d'approche AS à l'état d'échappement ES si l'engin marin 4 sort d'une zone d'approche et entre dans la zone interdite FZ (transition T9).

La machine à états 56 passe par exemple de l'état d'attente WS à l'état d'approche AS si l'engin marin 4 sort de la zone d'attente WZ pour repasser dans une zone d'approche (transition T10).

La machine à états 56 passe par exemple de l'état d'attente WS à l'état d'abandon si l'engin marin 4 sort de la zone d'attente WZ pour passer dans la zone interdite FZ (transition T11) et/ou si l'engin marin 4 sort de la zone d'amarrage DZ pour passer dans la zone interdite FZ (transition T12).

Le module de position 52 reçoit les données de positionnement fournies par le système de mesure de position 22 pour déterminer la position de l'engin marin 4 par rapport au dispositif de récupération 8, et le module de guidage 54 calcule des consignes de navigation et les transmets au système électronique de pilotage automatique 18 pour le suivi des consignes de navigation par l'engin marin 4, en fonction notamment de la position déterminée par le module de position 52 et pour mettre en œuvre la procédure de ralliement.

Le procédé de ralliement est mis en œuvre de manière automatisée, en particulier par un dispositif électronique de guidage 58 du système de ralliement 20, comprenant le module de position 52 et le module de guidage 54.

Chacun du module de position 52 et du module de guidage 54 est par exemple prévu sous la forme d'une application logicielle contenant des instructions de code de programme enregistrables dans une mémoire et exécutable par un processeur pour la réalisation du procédé de ralliement, sous la forme d'un composant logique programmable ou d'un circuit intégré dédié.

Comme illustré sur la Figure 2, le dispositif électronique de guidage 58 comprend une mémoire 60 dans laquelle sont enregistrés chacun du module de position 52 et du module de guidage 54, et un processeur 62 pour exécuter chacun du module de position 52 et du module de guidage 54.

Le dispositif électronique de guidage 58 est représenté séparément du navire 2, de l'engin marin 4 et du dispositif de récupération 8. En pratique, le dispositif électronique de guidage 58 peut être disposé sur l'un du navire 2, de l'engin marin 4 et du dispositif de récupération 8, ou même être situé à distance, sur un autre engin, par exemple un aéronef de supervision de la manoeuvre de ralliement.

Le dispositif électronique de guidage 58 peut aussi être réparti sur au moins deux parmi le navire 2, l'engin marin 4 et le dispositif de récupération 8.

Le dispositif électronique de guidage 58 est ici représenté séparément du système de pilotage automatique 18. En pratique, le dispositif électronique de guidage 58 et le système de pilotage automatique 18 peuvent être intégrés dans un même dispositif électronique ou système électronique.

Le procédé de ralliement basé sur le découpage de l'espace entourant le navire mère 2 en une pluralité de zones et le guidage de l'engin marin 4 vers le dispositif de récupération 8 en fonction de la zone dans laquelle se situe l'engin marin 4 permet de guider l'engin marin 4 jusqu'au dispositif de récupération 8 et d'assurer l'amarrage de l'engin marin 4 au dispositif de récupération 8 de manière sûre et robuste, dans des conditions de mer difficile, en particulier lorsque la mer est très formée.

Le procédé de ralliement peut être réalisé de manière automatique en se basant sur un système de mesure de position 22 et un système électronique de pilotage automatique 18 de l'engin marin 4, même dans des conditions de mer difficile.

Le procédé de ralliement est réalisé de manière simple, ce qui contribue à sa robustesse.

## Revendications

1. Procédé de ralliement d'un engin marin (4) équipé d'un système électronique de pilotage automatique (18) jusqu'à un dispositif de récupération (8) d'un navire mère (2) pour remonter l'engin marin (4) à bord du navire mère (2) à l'aide du dispositif de récupération (8), le procédé de ralliement étant mis en oeuvre de manière automatisée et comprenant :
- la détermination, par un module de position (52), d'une position de l'engin marin par rapport au dispositif de récupération (8), à partir de données de position fournies par un système de position (22) équipant l'engin marin (4), le dispositif de récupération (8) et/ou le navire mère (46) ;
- le calcul de consignes de navigation et leur transmission au système de pilotage automatique (18) de l'engin marin (4), par un module de guidage (54), les consignes de navigation étant calculées en fonction de la position de l'engin marin (4) et pour la mise en oeuvre d'une procédure de ralliement prédéterminée, basée sur la découpe de l'espace d'évolution de l'engin marin (4) autour du navire mère (2) en une pluralité de zones prédéfinies,
dans lequel
- la pluralité de zones prédéfinies comprend une zone interdite (FZ), au moins une zone d'approche (AZ1, AZ2, AZ3) et une zone d'amarrage (DZ), la procédure de ralliement étant configurée pour guider l'engin marin (4) se situant dans la zone interdite vers une zone d'approche, et pour guider l'engin marin se situant dans une zone d'approche vers la zone d'amarrage, la zone d'amarrage permettant l'amarrage de l'engin marin au dispositif de récupération, et
- les zones d'approche comprennent une première zone d'approche (AZ1) située sur un côté du navire mère (2), du même côté que le dispositif de récupération (8) en position de récupération, une deuxième zone d'approche (AZ2) située sur le côté du navire mère (2) du côté opposé au dispositif de récupération (8) et/ou une troisième zone d'approche (AZ3) située derrière le navire mère.

2. Procédé de ralliement selon la revendication 1, dans lequel la procédure de ralliement comprend le guidage de l'engin marin d'une zone d'approche vers la zone d'amarrage en suivant une ligne d'approche oblique par rapport un axe longitudinal du navire mère, la ligne d'approche s'étendant longitudinalement vers l'arrière du navire mère en s'écartant de l'axe longitudinal sur un côté du navire mère sur lequel se situe le dispositif de récupération.

3. Procédé de ralliement selon la revendication 2, dans lequel la procédure de ralliement comprend le guidage de l'engin marin (4) suivant la ligne d'approche (AL) jusqu'à un point d'inflexion (IP), puis le guidage de l'engin marin (4) à partir du point d'inflexion (4) jusqu'au dispositif de récupération (8) pour l'amarrage de l'engin marin au dispositif de récupération (8).

4. Procédé de ralliement selon l'une quelconque des revendications 2 à 3, dans lequel la zone interdite (FZ) est une bande imaginaire s'étendant suivant l'axe longitudinal (L) du navire mère (2) sur une largeur strictement supérieure à celle du navire mère.

5. Procédé de ralliement selon la revendication 4, dans lequel la procédure de ralliement autorise l'entrée de l'engin marin (4) dans la zone d'amarrage (DZ) seulement depuis la première zone d'approche (AZ1) en passant par un premier point de passage (PP1) prédéfini ou depuis la troisième zone d'approche (AZ3) en passant par un troisième point de passage (PP3) prédéfini.

6. Procédé de ralliement selon les revendications 4 et 5, dans lequel la procédure de ralliement autorise le passage de l'engin marin (4) de la deuxième zone d'approche (AZ2) à la troisième zone d'approche (AZ3) seulement en passant par un deuxième point de passage (PP2) prédéfini.

7. Procédé de ralliement selon l'une quelconque des revendications précédentes, dans lequel la procédure de ralliement comprend l'abandon de la procédure de ralliement si une condition d'abandon prédéfinie est remplie.

8. Procédé de ralliement selon l'une quelconque des revendications précédentes, dans lequel le module de guidage (56) met en oeuvre une machine à états (56) comprenant des états correspondant chacun au fait que l'engin marin (4) se situe dans une ou plusieurs parmi les zones de la pluralité de zones prédéfinies, et des transitions entre les états comprenant des transitions incluant le passage d'une zone à une autre parmi les zones de la pluralité de zones.

9. Système de ralliement configuré pour la mise en oeuvre du procédé de ralliement selon l'une quelconque des revendications précédentes, le système de ralliement comprenant un système de position (22) configuré pour fournir des données sur la position de l'engin marin (4) par rapport au dispositif de récupération (8) et/ou au navire mère (2) lors de la manœuvre de ralliement, un module de position (52) configuré pour déterminer la position de l'engin marin (4) en fonction de données de position fournies par le système de position (22) et un module de guidage (54) configuré pour calculer des consignes de navigation et les transmettre au système électronique de pilotage automatique (18) de l'engin marin (4) pour le suivi de la procédure de ralliement prédéfinie.

10. Programme d'ordinateur comprenant des instructions de code de programme pour la mise en œuvre d'un procédé de ralliement selon l'une quelconque des revendications 1 à 9.

## Patentansprüche

1. Rückführungsverfahren eines Wasserfahrzeugs (4), das mit einem elektronischen Autopilotsystem (18) ausgestattet ist, zu einer Bergungsvorrichtung (8) eines Mutterschiffs (2), um das Wasserfahrzeug (4) mittels der Bergungsvorrichtung (8) an Bord des Mutterschiffs (2) zu bringen, wobei das Rückführungsverfahren automatisiert durchgeführt wird und Folgendes umfasst:
- Bestimmen einer Position des Wasserfahrzeugs in Bezug auf die Bergungsvorrichtung (8) durch ein Positionsmodul (52) anhand von Positionsdaten, die von einem Positionssystem (22) bereitgestellt werden, mit dem das Wasserfahrzeug (4), die Bergungsvorrichtung (8) und/oder das Mutterschiff (46) ausgerüstet sind;
- Berechnen von Navigationsanweisungen und deren Übertragen an das elektronische Autopilotsystem (18) des Wasserfahrzeugs (4) durch ein Führungsmodul (54), wobei die Navigationsanweisungen abhängig von der Position des Wasserfahrzeugs (4) und für die Durchführung eines vorbestimmten Rückführungsverfahrens berechnet werden, das auf der Aufteilung des Entwicklungsraums des Wasserfahrzeugs (4) um das Mutterschiff (2) herum in eine Vielzahl von vordefinierten Zonen basiert,
wobei
- die Vielzahl von vordefinierten Zonen eine verbotene Zone (FZ), mindestens eine Annäherungszone (AZ1, AZ2, AZ3) und eine Andockzone (DZ) umfasst, wobei das Rückführungsverfahren konfiguriert ist, um das in der verbotenen Zone befindliche Wasserfahrzeug (4) zu einer Annäherungszone zu führen und das in einer Annäherungszone befindliche Wasserfahrzeug zu der Andockzone zu führen, die Andockzone das Andocken des Wasserfahrzeugs an der Bergungsvorrichtung ermöglicht, und
- die Annäherungszonen umfassend eine erste Annäherungszone (AZ1), die sich auf einer Seite des Mutterschiffs (2) auf derselben Seite wie die Bergungsvorrichtung (8) in der Bergungsposition befindet, eine zweite Annäherungszone (AZ2), die sich auf der Seite des Mutterschiffs (2) auf der gegenüberliegenden Seite der Bergungsvorrichtung (8) befindet, und/oder eine dritte Annäherungszone (AZ3), die sich hinter dem Mutterschiff befindet.

2. Rückführungsverfahren nach Anspruch 1,
wobei der Rückführungsvorgang das Führen des Wasserfahrzeugs von einer Annäherungszone zu der Andockzone entlang einer Annäherungslinie schräg zu einer Längsachse des Mutterschiffs umfasst, wobei sich die Annäherungslinie in Längsrichtung zu dem Heck des Mutterschiffs erstreckt und von der Längsachse auf einer Seite des Mutterschiffs, auf der sich die Bergungsvorrichtung befindet, abweicht.

3. Rückführungsverfahren nach Anspruch 2,
wobei der Rückführungsvorgang das Führen des Wasserfahrzeugs (4) entlang der Annäherungslinie (AL) zu einem Wendepunkt (IP) und dann das Führen des Wasserfahrzeugs (4) von dem Wendepunkt (4) zu der Bergungsvorrichtung (8) zum Andocken des Wasserfahrzeugs an der Bergungsvorrichtung (8) umfasst.

4. Rückführungsverfahren nach einem der Ansprüche 2 bis 3,
wobei die verbotene Zone (FZ) ein imaginärer Streifen ist, der sich entlang der Längsachse (L) des Mutterschiffs (2) über eine Breite erstreckt, die strikt größer ist als die des Mutterschiffs.

5. Rückführungsverfahren nach Anspruch 4,
wobei das Rückführungsverfahren das Eintreten des Wasserfahrzeugs (4) in die Andockzone (DZ) nur von der ersten Annäherungszone (AZ1) durch einen ersten vordefinierten Übergangspunkt (PP1) oder von der dritten Annäherungszone (AZ3) durch einen dritten vordefinierten Übergangspunkt (PP3) zulässt.

6. Rückführungsverfahren nach den Ansprüchen 4 und 5,
wobei das Rückführungsverfahren den Übergang des Wasserfahrzeugs (4) von der zweiten Annäherungszone (AZ2) zu der dritten Annäherungszone (AZ3) nur über einen vordefinierten zweiten Übergangspunkt (PP2) zulässt.

7. Rückführungsverfahren nach einem der vorherigen Ansprüche,
wobei das Rückführungsverfahren den Abbruch des Rückführungsverfahrens umfasst, wenn eine vordefinierte Abbruchbedingung erfüllt ist.

8. Rückführungsverfahren nach einem der vorherigen Ansprüche, wobei das Führungsmodul (56) eine Zustandsmaschine (56) implementiert, umfassend Zustände, die jeweils der Tatsache entsprechen, dass sich das Wasserfahrzeug (4) in einer oder mehreren der Vielzahl von vordefinierten Zonen befindet, und Übergänge zwischen den Zuständen, die Übergänge umfassen, die den Übergang von einer Zone zu einer anderen der Vielzahl von Zonen beinhalten.

9. Rückführungssystem, das für die Durchführung des Rückführungsverfahrens nach einem der vorherigen Ansprüche konfiguriert ist, das Rückführungssystem umfassend ein Positionssystem (22), das konfiguriert ist, um Daten über die Position des Wasserfahrzeugs (4) in Bezug auf die Bergungsvorrichtung (8) und/oder das Mutterschiff (2) während des Rückführungsmanövers bereitzustellen, ein Positionsmodul (52), das konfiguriert ist, um die Position des Wasserfahrzeugs (4) basierend auf den von dem Positionssystem (22) bereitgestellten Positionsdaten zu bestimmen, und ein Führungsmodul (54), das konfiguriert ist, um Navigationsanweisungen zu berechnen und diese an das elektronische Autopilotsystem (18) des Wasserfahrzeugs (4) zur Verfolgung des vordefinierten Rückführungsverfahrens zu übertragen.

10. Computerprogramm, umfassend Programmcode-Anweisungen zur Durchführung eines Rückführungsverfahrens nach einem der Ansprüche 1 bis 9.

## Claims

1. A homing method for a sea craft (4), equipped with an electronic automatic piloting system (18), guiding it toward a recovery device (8) of a mother ship (2) to bring the sea craft (4) on board the mother ship (2) using the recovery device (8), the homing method being implemented, in an automated manner and comprising:
- determining, by a position module (52), a position of the sea craft relative to the recovery device (8), from position data provided by a positioning system (22) equipping the sea craft (4), the recovery device (8) and/or the mother ship (46);
- calculating navigation setpoints and transmitting them to the automatic piloting system (18) of the sea craft (4), by a guidance module (54), the navigation setpoints being calculated as a function of the position of the sea craft (4) and for implementing a predetermined homing procedure, based on dividing the operating space of the sea craft (4) around the mother ship (2) into a plurality of predefined zones, wherein
- -the plurality of predefined zones comprises a forbidden zone (FZ), at least one approach zone (AZ1, AZ2, AZ3) and a docking zone (DZ), the homing procedure being configured to guide the sea craft (4) located in the forbidden zone toward an approach zone, and to guide the sea craft located in an approach zone toward the docking zone, the docking zone allowing docking of the sea craft to the recovery device, and
- the approach zones comprise a first approach zone (AZ1) located on one side of the mother ship (2), on the same side as the recovery device (8) in recovery position, a second approach zone (AZ2) located on the side of the mother ship (2) on the side opposite the recovery device (8) and/or a third approach zone (AZ3) located behind the mother ship.

2. The homing method according to claim 1,
wherein the homing procedure comprises guiding the sea craft from an approach zone toward the docking zone by following an approach line oblique relative to a longitudinal axis of the mother ship, the approach line extending longitudinally toward the rear of the mother ship while moving away from the longitudinal axis on the side of the mother ship on which the recovery device is located.

3. The homing method according to claim 2,
wherein the homing procedure comprises guiding the sea craft (4) along the approach line (AL) up to an inflection point (IP), then guiding the sea craft (4) from the inflection point (4) up to the recovery device (8) for docking of the sea craft to the recovery device (8).

4. The homing method according to any one of claims 2 to 3.
wherein the forbidden zone (FZ) is an imaginary strip extending according to the longitudinal axis (L) of the mother ship (2) over a width strictly greater than that of the mother ship.

5. The homing method according to claim 4 wherein the homing procedure authorizes entry of the sea craft (4) into the docking zone (DZ) only from the first approach zone (AZ1) by passing through a first predefined waypoint (PP1) or from the third approach zone (AZ3) by passing through a third predefined waypoint (PP3).

6. The homing method according to claims 4 and 5,
wherein the homing procedure authorizes passage of the sea craft (4) from the second approach zone (AZ2) to the third approach zone (AZ3) only by passing through a second predefined waypoint (PP2).

7. The homing method according to any one of the preceding claims,
wherein the homing procedure comprises abandoning the homing procedure if one predefined abandonment condition is met.

8. The homing method according to any one of the preceding claims,
wherein the guidance module (56) implements a state machine (56) comprising states each corresponding to the fact that the sea craft (4) is located in one or more among the zones of the plurality of predefined zones, and transitions between the states comprising transitions including passage from one zone to another among the zones of the plurality of zones.

9. The homing system configured for implementing the homing method according to any one of the preceding claims, the homing system comprising a positioning system (22) configured to provide data on the position of the sea craft (4) relative to the recovery device (8) and/or to the mother ship (2) during the homing maneuver, a position module (52) configured to determine the position of the sea craft (4) as a function of position data provided by the positioning system (22) and a guidance module (54) configured to calculate navigation setpoints and transmit them to the electronic automatic piloting system (18) of the sea craft (4) for following the predetermined homing procedure.

10. A computer program comprising program code instructions for implementing a homing method according to any one of claims 1 to 9.
